# EUROPEAN PATENT SPECIFICATION

(11) **EP 2 006 076 B1**
(45) Date of publication and mention of the grant of the patent: **18.11.2015**
(21) Application number: 06725848.3
(22) Date of filing: 31.03.2006
(51) Int. Cl.: B29C 70/06, B29C 70/34, B29D 99/00, B29C 70/44

(54) **METHOD FOR PRODUCING COMPOSITE-MATERIAL STRUCTURES WITH COLLAPSIBLE TOOLING**
VERFAHREN ZUR HERSTELLUNG VON VERBUNDMATERIALSTRUKTUREN MIT ZUSAMMENKLAPPBAREN WERKZEUGEN
PROCÉDÉ DE FABRICATION DE STRUCTURES EN MATÉRIAU COMPOSITE À L'AIDE D'UN OUTILLAGE PLIABLE

(43) Date of publication of application: 24.12.2008
(73) Proprietor: Airbus Operations S.L., 28906 Madrid (ES)
(72) Inventor: MARTINEZ CEREZO, Alberto Ramón, E-28660 Boadilla del Monte (ES); CUENCA RINCON, José c/o AIRBUS ESPAÑA, S.L., E-28906 Getafe, Madrid (ES); CARRASCO CARRASCAL, José c/o AIRBUS ESPAÑA, S.L., E-28906 Getafe, Madrid (ES)
(74) Representative: Elzaburu Marquez, Alberto
(86) International application number: PCT/ES2006/070040
(87) International publication number: WO 2007/113345

(56) References cited:
- US-A- 4 946 526
- US-A- 5 707 576
- US-A- 6 071 591
- US-A1- 2004 070 108
- US-A1- 2004 070 108
- US-B1- 6 613 258

## Description

### FIELD OF THE INVENTION

The present invention relates to a process for manufacturing structures formed by a skin with closed section stiffeners or stringers, manufactured with composite material, particularly applicable to aeronautic fuselages.

### BACKGROUND OF THE INVENTION

Weight is an essential aspect in the aeronautical industry, therefore optimized structures manufactured with composite materials prevail over metallic ones.

Automatic carbon fibre taping machines are a great development with respect to manual operation. These machines have a head which presses the surface to be taped, so said surface must react said force.

Applying the foregoing aspects to aeronautical fuselages leads to integrating the panels with their stiffeners or stringers in the lowest number of operations and to optimizing said stiffeners or stringers.

Closed section stiffeners or stringers allow achieving stiffer structures by adding a lower weight per stiffener or stringer. Incorporating this type of stiffener or stringer complicates the manufacturing process because it requires tools inside the stiffeners or stringers allowing the taping of the piece and the curing operation of the composite material and removing the stiffeners or stringers from inside the stiffener or stringer if this is intended to be hollow.

Processes for manufacturing said structures are known in which a stiff element is introduced inside the stiffener or stringer section to react the taping pressure and the composite material curing pressure.

These processes are expensive so it is desirable to have more efficient processes, an objective which is achieved by the present invention.

US-A-5707576 discloses the features of the preamble of claim 1.

### SUMMARY OF THE INVENTION

In a first aspect, the present invention proposes a process for manufacturing stiffened structures in composite materials formed by an outer skin and a plurality of stiffeners or stringers whose cross-section has a broken contour with at least one flange joined to the skin, said contour delimiting an inner opening, the process comprising the following steps:
- Providing a shaping tool with an outer surface with a shape similar to that of the structure on the side of the stiffeners or stringers, including slots to house the stiffeners or stringers.
- Providing auxiliary male tools consisting of elements made of a material capable of varying its volume due to the effect of temperature and/or pressure, shaped with a geometry similar to the inner opening of the stiffeners or stringers and covered with membranes suitable for curing composite materials.
- Providing stiffeners or stringers in fresh or cured state;
- Arranging the stiffeners or stringers in the slots of the tool, adapting them to the geometry of the slots and arranging in their inner openings the auxiliary male tools, adapted to their geometry. In this step, the auxiliary male tools help the curing membrane to adapt itself to the inner geometry of each stiffener or stringer.
- Laminating the outer skin on the surface formed by the tool, the stiffeners or stringers and the auxiliary male tools. The shaping tool and the auxiliary male tools react to the laminating force.
- Curing the stiffened structure at high temperature and pressure conditions.
- Removing the auxiliary male tools. After curing, their volume decrease allowing removal.
- Separating the cured stiffened structure from the tool.

The auxiliary male tools used in the foregoing processes can be implemented in a polymer such as polyurethane or polystyrene, which, due to the effect of temperature and/or pressure of the process, undergoes a change that allows removing it later from inside the stiffeners or stringers.

An advantage of the present invention is that it facilitates manufacturing structures in which the section and the area of the stiffeners or stringers vary longitudinally and even have smaller dimensions than the intermediate section in one or both ends, because the auxiliary male tools can be shaped so as to be adapted to it.

Another advantage is that it facilitates using machines with a pressing taping head because the auxiliary male tools provide a substrate inside the stiffeners or stringers for reacting the force of the head.

Other features and advantages of the present invention will be disclosed in the following detailed description of an illustrating embodiment of the object relating to the attached drawings.

### DESCRIPTION OF THE DRAWINGS

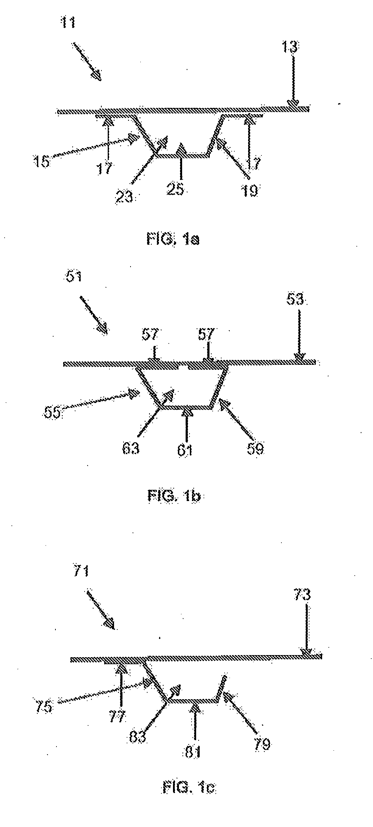

Figures 1a, 1b and 1c show schematic views of structures formed by a skin and a plurality of omega, trapezium and irregular Z shaped stiffeners or stringers, respectively.
Figure 2 schematically shows the steps of the process according to the invention for manufacturing a structure formed by a skin and a plurality of omega-shaped stiffeners or stringers by means of which the stiffeners or stringers and auxiliary male tools covered by a membrane suitable for curing are arranged in the structure shaping tool.
Figure 3 schematically shows the step of the process according to the invention for manufacturing a structure formed by a skin and a plurality of omega-shaped stiffeners or stringers by means of which the taping process of the skin is carried out.
Figure 4 schematically shows the step of the process according to the invention for manufacturing a structure formed by a skin and a plurality of omega-shaped stiffeners or stringers by means of which the curing process is carried out.
Figure 5 schematically shows the steps of the process according to the invention for manufacturing a structure formed by a skin and a plurality of omega-shaped stiffeners or stringers by means of which the volume of the auxiliary male tools is reduced and the structure is separated from the tools used for its manufacturing.

### DETAILED DESCRIPTION OF THE INVENTION

An embodiment of the process according to the invention for manufacturing stiffened structures 11 in composite materials formed by a skin 13 and a plurality of omega-shaped (Ω) stiffeners or stringers 15 with flanges 17 joined to skin 13, and webs 19 separated from it will be described later on.

The process object of the present invention is also applicable for manufacturing a stiffened structure 51 formed by a skin 53 and a plurality of trapezium-shaped stiffeners or stringers 55 with flanges 57 joined to skin 53, and webs 59 and head 61 separated from it, as well as a stiffened structure 71 formed by a skin 73 and a plurality of irregular Z-shaped stiffeners or stringers 75 with a flange 77 joined to the skin 73, and webs 79 and head 81 separated from it.

What stiffeners or stringers 15, 55 and 75 have in common is that their cross-section has a broken contour with at least a flange 17, 57, 77 joined to the skin 13, 53, 73 said contour delimiting an inner opening 23, 63, 83.

Structures 11, 51, 71 can have an open form or a revolving piece form as in the case of airplane fuselage pieces.

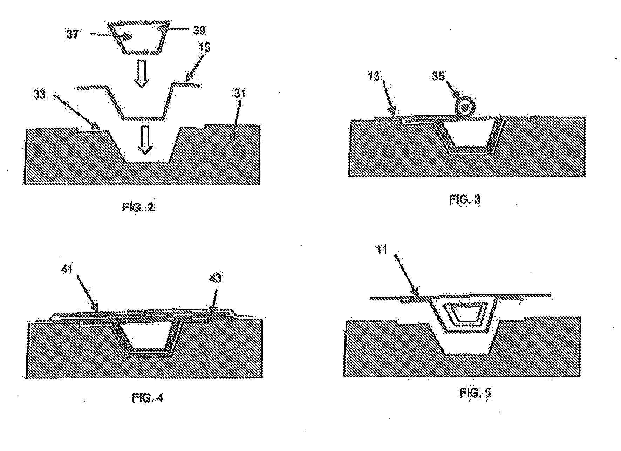

Proceeding now to the description of the process, it can be observed by following Figure 2, that the omega-shaped stiffeners or stringers 15 are placed on the shaping tool 31 having slots 33, and auxiliary male tools 37 covered with a membrane 39 suitable for curing composite materials are placed on the stiffeners or stringers.

Cured or uncured stiffeners or stringers 15 can be used.

Male auxiliary tools 37 are obtained from a material that by the effect of temperature and/or pressure undergoes a change in volume which allows removing them from the stiffeners or stringers 15 such as for example, a polymer like polyurethane or polystyrene and they are provided with a geometry similar to the inner opening 23 of the stiffener or stringer using a suitable shaping technique.

When each auxiliary male tool 37 is introduced in the opening 23 of the stiffener or stringer 15, the curing membrane 39 is aided in being coupled to the inner geometry of each stiffener or stringer 15.

The stiffeners or stringers 15 and the male tools 37 can be arranged on the shaping tool 31, previously coupling them.

It can be observed in Figure 3 that in a subsequent step, skin 13 is laminated by means of the head 35 of a taping machine on the surface formed by the shaping tool 31, the stiffeners or stringers 15 and the membrane 39 covering the auxiliary male tools 37. In this step, the shaping tool 31 and the auxiliary male tools 37 react the force of the taping head 35.

A variant of the process is the manual taping operation of skin 13.

It can be observed in Figure 4 that in a subsequent step, a curing membrane 41, and optionally a caul-plate 43, is placed on the overall structure. Then, the structure is cured at high temperature and pressure conditions in an autoclave. During the curing process, membrane 39 covering the auxiliary male tools 37 communicates the inside of the stiffeners or stringers 15 with the inner autoclave atmosphere and achieves maintaining the pressure on the surrounding composite material, i.e. the composite material of the stiffener or stringer 15 and of the skin 13, producing the curing.

Once the structure 11 is cured and cooled down, the auxiliary male tools 37 are removed, as illustrated in Figure 5 by depicting them with a size smaller than the initial size, for facilitating the separation of structure 11 from the shaping tool 31 and the removal of the auxiliary male tools 37 from inside the stiffeners or stringers 15.

Modifications comprised within the scope defined by the following claims can be introduced in the preferred embodiment which has just been described.

## Claims

1. A process for manufacturing stiffened structures (11) in composite materials formed by an outer skin (13) and a plurality of stiffeners or stringers (15) whose cross-section has a broken contour with at least one flange (17) joined to the skin (13), said contour delimiting an inner opening (23), the process comprising the following steps:
a) providing a tool (31) with an outer surface with a shape similar to that of structure (11) on the side of the stiffeners or stringers (15), including slots (33) to house the stiffeners or stringers (15);
b) providing stiffeners or stringers (15) in fresh or cured condition;
c) arranging the stiffeners or stringers (15) in the slots (33) of tool (31), adapting them to the geometry of the slots and arranging in their inner openings (23) the auxiliary male tools (37), adapted to their geometry;
d) laminating the outer skin (13) by the head (35) of a taping machine on the surface formed by the tool (31), the stiffeners or stringers (15) and the auxiliary male tools (37);
e) curing the stiffened structure (11) at high temperature and pressure conditions in an autoclave;
f) removing the auxiliary male tools (37), and
g) separating the cured stiffened structure (11) from the tool (31)
**characterized in that** the process also comprises, between steps a) and b), a further step of providing auxiliary male tools (37) consisting of elements made of a material capable of varying its volume due to the effect of temperature and/or pressure, shaped with a geometry similar to the inner opening (23) of the stiffeners or stringers, the auxiliary male tools (37) reacting the force of the head (35) of the taping machine at step d), the auxiliary male tools (37) being covered with membranes (39), such that, during step e), said membranes (39) communicate the inside of the stiffeners or stringers (15) with the inner atmosphere at the curing autoclave, achieving maintaining the pressure of the material of the stinger or stiffener (15) and of the outer skin (13), therefore producing the curing of such materials.

2. A process for manufacturing stiffened structures (11) in composite materials according to claim 1, **characterized in that** the stiffened structure (11) is a tubular piece.

3. A process for manufacturing stiffened structures (11) in composite materials according to any of the previous claims, **characterized in that** the stiffeners or stringers (15) have an omega shape.

4. A process for manufacturing stiffened structures (11) in composite materials according to any of the previous claims, **characterized in that** in step c) the stiffeners or stringers are arranged in the slots (33) of the tool (31) having previously coupled the auxiliary male tools (37) in their inner openings (23).

5. A process for manufacturing stiffened structures (11) in composite materials according to any of the previous claims, **characterized in that** step d) is carried out by a head (35) of a taping machine.

6. A process for manufacturing stiffened structures (11) in composite materials according to any of the previous claims, **characterized in that** before step e) a caul-plate (43) is placed on the skin (13).

7. A process for manufacturing stiffened structures (11) in composite materials according to any of claims 1-6, **characterized in that** the auxiliary male tool (37) is made of polyurethane.

8. A process for manufacturing stiffened structures (11) in composite materials according to any of claims 1-6, **characterized in that** the auxiliary male tool (37) is made of polystyrene.

## Patentansprüche

1. Verfahren zur Herstellung versteifter Strukturen (11) in Verbundwerkstoffen gebildet durch eine äußere Haut (13) und eine Mehrzahl von Versteifungen oder Stringern (15), deren Querschnitte eine gebrochene Kontur mit wenigstens einem mit der Haut (13) verbundenen Flansch (17) aufweist, wobei die Kontur eine innere Öffnung (23) begrenzt, wobei das Verfahren die folgenden Schritte aufweist:
a) Bereitstellen eines Werkzeugs (31) mit einer äußeren Oberfläche mit einer Form ähnlich der Struktur (11) auf der Seite der Versteifungen oder Stringern (15), aufweisend Schlitze (33) zur Aufnahme der Versteifungen oder Stringern (15);
b) Bereitstellen der Versteifungen oder Stringern (15) im frischen oder ausgehärteten Zustand;
c) Anordnen der Versteifungen oder Stringern (15) in den Schlitzen (33) des Werkzeuges (31), Anpassen dieser an die Geometrie der Schlitze (33) und Anordnen der männlichen Hilfswerkzeuge (37) in deren inneren Öffnungen (23), angepasst an deren Geometrie;
d) Laminieren der äußeren Haut (13) durch den Kopf (35) einer Bandagiermaschine auf die durch das Werkzeug (31), den Versteifungen oder Stringern (15) und den männlichen Hilfswerkzeugen (37) gebildeten Oberfläche;
e) Aushärten der versteiften Struktur (11) unter hohen Temperatur- und Druckbedingungen in einem Autoklaven;
f) Entfernen der männlichen Hilfswerkzeuge (37), und
g) Trennen der ausgehärteten versteiften Strukturen (11) vom Werkzeug (31)
**dadurch gekennzeichnet, dass** das Verfahren darüber hinaus zwischen den Schritten a) und b) einen weiteren Schritt aufweist, in dem männliche Hilfswerkzeuge (37) bereitgestellt werden, bestehend aus Elementen, die aus einem Material hergestellt sind, was dazu geeignet ist, durch Auswirkung der Temperatur und/oder des Drucks sein Volumen zu verändern, die eine der inneren Öffnung (23) der Versteifungen oder Stringern ähnlich ausgebildete Geometrie aufweisen, die männlichen Hilfswerkzeuge (37) auf die Kraft des Kopfes (35) der Bandagiermaschine im Schritt d) reagieren, die männlichen Hilfswerkzeuge (37) mit Membranen (39) abgedeckt sind, sodass während des Schritts e) die Membranen (39) eine Kommunikation des Inneren der Versteifungen oder Stringern (15) mit der inneren Atmosphäre des Aushärte-Autoklaven bewirken, Erreichen einer Aufrechterhaltung des Drucks auf das Material der Versteifungen oder Stringern (15) und der äußeren Haut (13), wodurch eine Aushärtung solcher Materialien bewirkt wird.

2. Verfahren zur Herstellung versteifter Strukturen (11) in Verbundwerkstoffen gemäß Anspruch 1, **dadurch gekennzeichnet, dass** die versteifte Struktur (11) ein rohrförmiges Stück ist.

3. Verfahren zur Herstellung versteifter Strukturen (11) in Verbundwerkstoffen gemäß einem der voranstehenden Ansprüche, **dadurch gekennzeichnet, dass** die Versteifungen oder Stringer (15) eine omega-artige Form aufweisen.

4. Verfahren zur Herstellung versteifter Strukturen (11) in Verbundwerkstoffen gemäß einem der voranstehenden Ansprüche, **dadurch gekennzeichnet, dass** im Schritt c) die Versteifungen oder Stringer (15) in den Schlitzen (33) des Werkzeugs (31) angeordnet sind oder werden, wobei zuvor die männlichen Hilfswerkzeuge (37) in ihren inneren Öffnungen (23) gekoppelt haben.

5. Verfahren zur Herstellung versteifter Strukturen (11) in Verbundwerkstoffen gemäß einem der voranstehenden Ansprüche, **dadurch gekennzeichnet, dass** Schritt d) durch einen Kopf (35) einer Bandagiermaschine durchgeführt wird.

6. Verfahren zur Herstellung versteifter Strukturen (11) in Verbundwerkstoffen gemäß einem der voranstehenden Ansprüche, **dadurch gekennzeichnet, dass** vor Schritt e) ein Pressblech (43) auf der Haut (13) platziert wird.

7. Verfahren zur Herstellung versteifter Strukturen (11) in Verbundwerkstoffen gemäß einem der Ansprüche 1 bis 6, **dadurch gekennzeichnet, dass** das männliche Hilfswerkzeug (37) aus Polyurethan hergestellt ist.

8. Verfahren zur Herstellung versteifter Strukturen (11) in Verbundwerkstoffen gemäß einem der Ansprüche 1 bis 6, **dadurch gekennzeichnet, dass** das männliche Hilfswerkzeug (37) aus Polystyrol hergestellt ist.

## Revendications

1. Procédé de fabrication de structures rigidifiées (11) en matériaux composites formées par une enveloppe extérieure (13) et une pluralité de raidisseurs ou lisses (15) dont la section transversale a un contour discontinu avec au moins une bride (17) liée à l'enveloppe (13), ledit contour délimitant une ouverture intérieure (23), le procédé comprenant les étapes suivantes :
a) fournir un outil (31) dont la surface extérieure a une forme similaire à celle de la structure (11) du côté des raidisseurs ou lisses (15), comprenant des fentes (33) destinées à recevoir les raidisseurs ou lisses (15) ;
b) fournir des raidisseurs ou lisses (15) dans un état cru ou cuit ;
c) disposer les raidisseurs ou lisses (15) dans les fentes (33) de l'outil (31), en les adaptant à la géométrie des fentes et disposer dans leurs ouvertures intérieures (23) les outils mâles auxiliaires (37), adaptés à leur géométrie ;
d) contre-coller l'enveloppe extérieure (13) au moyen de la tête (35) d'une jointeuse sur la surface formée par l'outil (31), les raidisseurs ou lisses (15) et les outils mâles auxiliaires (37) ;
e) cuire la structure rigidifiée (11) dans des conditions de température et de pression élevées dans un autoclave ;
f) retirer les outils mâles auxiliaires (37), et
g) séparer la structure rigidifiée cuite (11) de l'outil (31) ;
**caractérisé en ce que** le procédé comprend en outre, entre les étapes a) et b), une étape supplémentaire consistant à fournir des outils mâles auxiliaires (37) constitués d'éléments faits d'un matériau dont le volume peut varier en fonction de la température et/ou de la pression, ayant une géométrie similaire à celle de l'ouverture intérieure (23) des raidisseurs ou lisses, les outils mâles auxiliaires (37) réagissant à l'effort de la tête (35) de la jointeuse à l'étape d), les outils mâles auxiliaires (37) étant recouverts de membranes (39) de sorte que, pendant l'étape e), lesdites membranes (39) font communiquer l'intérieur des raidisseurs ou lisses (15) avec l'atmosphère intérieure de l'autoclave de cuisson, ce qui permet de maintenir la pression du matériau du raidisseur ou lisse (15) et de l'enveloppe extérieure (13), et donc de produire la cuisson de ces matériaux.

2. Procédé de fabrication de structures rigidifiées (11) en matériaux composites selon la revendication 1, **caractérisé en ce que** la structure rigidifiée (11) est une pièce tubulaire.

3. Procédé de fabrication de structures rigidifiées (11) en matériaux composites selon l'une quelconque des revendications précédentes, **caractérisé en ce que** les raidisseurs ou lisses (15) ont une forme d'oméga.

4. Procédé de fabrication de structures rigidifiées (11) en matériaux composites selon l'une quelconque des revendications précédentes, **caractérisé en ce que**, à l'étape c), les raidisseurs ou lisses sont disposés dans les fentes (33) de l'outil (31) en ayant au préalable accouplé les outils mâles auxiliaires (37) dans leurs ouvertures intérieures (23).

5. Procédé de fabrication de structures rigidifiées (11) en matériaux composites selon l'une quelconque des revendications précédentes, **caractérisé en ce que** l'étape d) est exécutée par une tête (35) de jointeuse.

6. Procédé de fabrication de structures rigidifiées (11) en matériaux composites selon l'une quelconque des revendications précédentes, **caractérisé en ce que**, avant l'étape e), on place une tôle de conformation (43) sur l'enveloppe (13).

7. Procédé de fabrication de structures rigidifiées (11) en matériaux composites selon l'une quelconque des revendications 1 à 6, **caractérisé en ce que** l'outil mâle auxiliaire (37) est en polyuréthane.

8. Procédé de fabrication de structures rigidifiées (11) en matériaux composites selon l'une quelconque des revendications 1 à 6, **caractérisé en ce que** l'outil mâle auxiliaire (37) est en polystyrène.
